(19) Europäisches Patentamt
European Patent Office
Office européen des brevets

(11) Veröffentlichungsnummer: **0 069 705**
**B1**

# (12) EUROPÄISCHE PATENTSCHRIFT

(45) Veröffentlichungstag der Patentschrift: **29.05.85**

(21) Anmeldenummer: **82810283.0**

(22) Anmeldetag: **02.07.82**

(51) Int. Cl.⁴: **A 01 N 47/30** // (A01N47/30, 43:84, 47:30, 43:64, 47:30, 43:56, 47:30, 43:40)

## (54) Synergistisches Mittel und Verfahren zur selektiven Unkrautbekämpfung, insbesondere in Getreide.

(30) Priorität: **08.07.81 CH 4485/81**

(43) Veröffentlichungstag der Anmeldung: **12.01.83 Patentblatt 83/2**

(45) Bekanntmachung des Hinweises auf die Patenterteilung: **29.05.85 Patentblatt 85/22**

(84) Benannte Vertragsstaaten: **AT BE CH DE FR GB IT LI NL**

(56) Entgegenhaltungen:
**EP-A-0 000 414**
**EP-A-0 043 802**
**FR-A-2 430 941**

(73) Patentinhaber: **CIBA-GEIGY AG, Postfach, CH-4002 Basel (CH)**

(72) Erfinder: **Quadranti, Marco, Dr., Promenade 24, CH-5200 Brugg (CH)**
Erfinder: **Maag, Kurt, Krebsenbachweg 18, CH-4148 Pfeffingen (CH)**

EP 0 069 705 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die vorliegende Erfindung betrifft ein synergistisches Mittel, welches eine herbizide Wirkstoffkombination enthält, die sich hervorragend eignet zur postemergenten selektiven Unkrautbekämpfung in Getreidekulturen.

Herbizide Wirkstoffe aus der Reihe der Halogenpyridyloxy-α-phenoxy-propionsäuren und ihrer Derivate, wie sie beispielsweise in der DE-OS 2 546 251 beschrieben worden sind, zeichnen sich bei Nachauflauf-Anwendung durch eine starke Wirkung gegen in Getreide vorkommende Ungräser aus. Die Substanzen dieses Typs, wie z. B. α-[4-(3′,5′-Dichlorpyridyl-2′-oxy)-phenoxy]-propionsäure und deren niedere Alkylester, können trotz der hervorragenden herbiziden Wirkung nicht selektiv eingesetzt werden, da auch Getreidearten wie Weizen, Gerste und Reis zu stark mitgeschädigt werden.

Wie in der europäischen Patentpublikation 3114 ausgeführt wird, erreicht man im Falle des Weizens und der Gerste eine bessere Selektivität gegen die monokotylen Unkräuter in diesen Kulturen, wenn man anstelle der α-[4-(3′,5′-Dichlorpyridyl-2′-oxy)-phenoxy]-propionsäure resp. der Niederalkylester aus der DE-OS 2 546 251, die in der obigen Publikation beschriebenen ungesättigten Propionsäureresp. Thiopropionsäureester verwendet.

Bei sehr starker Verunkrautung durch monokotyle Unkräuter ist es jedoch auch bei Verwendung dieser ungesättigten Ester nicht immer möglich, die Unkräuter zu vernichten ohne dabei die Dosierung zu überschreiten, die auch eine Schädigung der Getreidekultur verursacht.

In 3-(4-Isopropylphenyl)-1,1-dimethylharnstoff (Isoproturon) der Formel I a

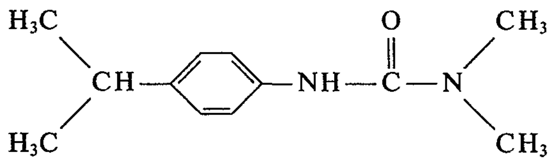

(I a)

und 3-(3-Chlor-4-methylphenyl)-1,1-dimethyl-harnstoff (Chlortoluron) der Formel I b

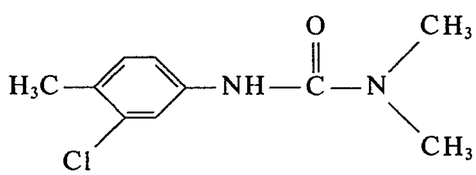

(I b)

stehen seit einiger Zeit Getreideherbizide zur Verfügung, die selektiv wirksam sind gegen monokotyle und einige dikotyle Unkräuter (siehe DE-OS 2 107 774 und belgische Patentschrift 728 267).

In der EP-A-4414 sind Gemische von herbiziden Pyridyloxyphenoxypropionsäurederivaten mit verschiedenen anderen bekannten Herbiziden beschrieben. Die offenbarten Herbizidgemische haben generell ein breiteres Wirkungsspektrum als die Einzelkomponenten, wobei sich die Herbizidwirkungen additiv ergänzen. Insbesondere werden jeweils Wirkungslücken ausgefüllt. Solche Kombinationen sind in der Agrartechnik üblich und zeigen im allgemeinen keine unerwarteten Wirkungsweisen.

Eine Misch-Kombination der oben genannten Harnstoffe mit 4-(3′,5′-Dichlorpyridyl-2′-oxy)-α-phenoxy-propionsäurepropargylester oder 4-(3′,-5′-Dichlor-pyridyl-2′-oxy)-α-phenoxy-thiopropionsäurepropargylester bildet den Gegenstand der europäischen Patentanmeldung 43 802. Diese Mischungen zeigen einen synergistischen Effekt gegen Unkräuter in Getreide, ohne dabei die Kulturpflanzen zu schädigen.

Es wurde nun völlig überraschend gefunden, daß sich synergistische Effekte nicht nur mit den oben erwähnten Komponenten erreichen lassen, sondern daß eine starke Verallgemeinerung dieser Lehre möglich ist.

Die Erfindung betrifft somit ein synergistisches herbizides Mittel, das als Wirkstoffkomponenten einerseits 3-(4-Isopropylphenyl)-1,1-dimethylharnstoff (I a) oder 3-(3-Chlor-4-methylphenyl)-1,1-dimethylharnstoff (I b) und andererseits ein Halogenpyridyloxy-phenoxy-alkancarbonsäurederivat der Formel II enthält,

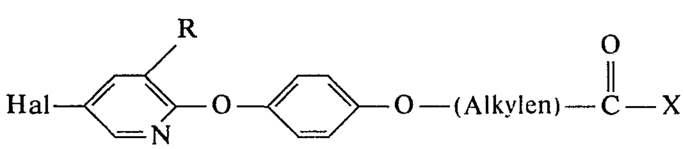

(II)

worin

Hal für Halogen,
R für Wasserstoff, Halogen oder $C_1$—$C_4$-Alkyl,

Alkylen für eine gesättigte, geradkettige oder verzweigte $C_2$—$C_4$-Alkylenkette und
X für eine der Gruppen $-O^{\ominus}Y^{\oplus}$, $-O-R_1$, $-S-R_2$, $-NR_3R_4$ oder $-O-N=CR_6R_7$ stehen, wobei
$R_1$ und $R_2$ jeweils Wasserstoff, $C_1$—$C_5$-Alkyl, $C_1$—$C_4$-Halogenalkyl, $C_2$—$C_6$-Halogenalkenyl, $C_2$—$C_6$-Alkenyl, $C_3$—$C_6$-Alkinyl, $C_3$—$C_6$-Halogenalkinyl, $C_2$—$C_4$-Carboxyalkyl, $C_1$—$C_4$-Cyanoalkyl, $C_1$—$C_4$-Hydroxyalkyl, $C_1$—$C_4$-Aminocarboxyalkyl, gegebenenfalls durch Cyan, —COO-Alkyl oder —CO-Alkyl substituiertes $C_3$—$C_6$-Alkoxycarboxyalkyl, gegebenenfalls durch Nitro, Cyan, Halogen oder $C_1$—$C_4$-Alkyl substituiertes Phenyl oder Phenylalkyl mit 1 bis 3 Kohlenstoffatomen im Alkylteil oder eine der Gruppen $C_2$—$C_4$-Alkylen—$NR_3R_4$ oder $C_2$—$C_4$-Alkylen—$N^{\oplus}R_3R_4R_5Z^{\ominus}$,
$R_3$ Wasserstoff, $C_1$—$C_4$-Alkyl, $C_3$—$C_5$-Alkoxyalkyl, $C_1$—$C_4$-Halogenalkyl, $C_2$—$C_4$-Carboxyalkyl, $C_3$—$C_6$-Alkoxycarboxyalkyl, $C_1$—$C_4$-Hydroxyalkyl oder —CO-Alkyl,
$R_4$ Wasserstoff, $C_1$—$C_4$-Alkyl, $C_2$—$C_4$-Alkenyl oder $C_1$—$C_4$-Hydroxyalkyl,
$R_5$ Wasserstoff oder $C_1$—$C_4$-Alkyl,
$R_6$ und $R_7$ jeweils $C_1$—$C_4$-Alkyl,
$Y^{\oplus}$ ein Alkali-, Erdalkali- oder Ammonium-Kation und
$Z^{\ominus}$ ein Halogenanion bedeuten, oder wobei
$R_3$ und $R_4$ zusammen mit dem sie bindenden Stickstoffatom einen Pyrrolidin-, Piperidin-, Morpholin-, Thiomorpholin-, Piperazin-, Pyrazol- oder Triazolring und
$R_6$ und $R_7$ zusammen mit dem sie bindenden Stickstoffatom einen Pyrrolidin- oder Piperidinring bilden können, unter Ausnahme der beiden Verbindungen 4-(3',5'-Dichlorpyridyl-2'-oxy)-$\alpha$-phenoxy-propionsäurepropargylester und 4-(3',5'-Dichlorpyridyl-2'-oxy)-$\alpha$-phenoxy-thiopropionsäurepropargylester.

In der Definition der Formel II ist unter Alkyl als Substituent oder Teil eines Substituenten Methyl, Äthyl, i-Propyl, n-Propyl, die vier isomeren Butyl- sowie die isomeren Pentylreste zu verstehen.

Die Alkylenbrücke ist verkörpert durch $-CH(CH_3)-$, $-(CH_2)_2-$, $-(CH_2)_3-$, $-(CH_2)_4$, $-CH(CH_3)-(CH_2)_2-$, vorzugsweise jedoch durch $-CH(CH_3)-$.

Halogen als Substituent oder Teil eines Substituenten steht für Fluor, Chlor, Brom und Jod, vorzugsweise jedoch für Fluor und Chlor.

Beispiele für Carboxyalkyl sind: $-CH_2-COOH$, $-(CH_2)_2-COOH$, $-(CH_2)_3-COOH$ und $-CH(CH_3)-COOH$; für Cyanoalkyl: Cyanomethyl, Cyanoäthyl, Cyanopropyl, $-CH(CH_3)-CN$, $-C(CH_3)_2-CN$ und $-(CH_2)_3-CN$; für Hydroxyalkyl: Hydroxymethyl, Hydroxyäthyl,

$-CH_2-CH(CH_3)-OH$;

für Alkoxycarboxyalkyl: $-CH_2-COOCH_3$, $-CH(CH_3)-COOC_2H_5$, $-CH(CH_3)-COOCH_3$,

$-(CH_2)_2-COOC_2H_5$

und $-CH_2-COOC_2H_5$; für Phenylalkyl: Benzyl, $-(CH_2)_2-C_6H_5$, $-CH(CH_3)-C_6H_5$, vorzugsweise jedoch Benzyl und für Aminocarboxyalkyl: $-CH_2-CONH_2$, $-CH(CH_3)-CONH_2$, $-(CH_2)_2-CONH_2$ oder $-CH(CH_3)-CONHC_2H_5$.

Alkenyl und Halogenalkenylreste sind beispielsweise: Vinyl, Alkyl, 2-Methyl-allyl, 3-Butenyl, 3-Chloralkyl, 2-Bromallyl, 2-Butenyl, 2-Chlorallyl, 3-Chlor-2-butenyl, 1-Äthyl-1-methyl-allyl, 1,1-Dimethylallyl und 2,3-Dichlorallyl.

Alkinyl und Halogenalkinylreste sind im allgemeinen: Propargyl, 4-Chlor-2-butinyl, 1,1-Dimethylpropargyl, 1-Propyl-propargyl und 1-Äthyl-1-methylpropargyl.

Alkoxyalkylreste sind: Methoxymethyl, Äthoxymethyl, Methoxyäthyl, Äthoxyäthyl und Methoxypropyl.

Die Wirkstoffe der Formeln I a, I b und II und ihre Wirkung auf Pflanzen sind in den oben genannten Patentpublikationen beschrieben worden. Die Wirkstoffe der Formel II können dabei als Racemate oder als optisch aktive R- und S-Formen vorliegen.

Unter den Mischungskomponenten der Formel II sind diejenigen bevorzugt, in denen Hal und R für Chlor stehen, Alkylen die Gruppe $-CH(CH_3)-$ verkörpert und X für $-OR_1$, $-S-R_2$ oder $-NR_3R_4$ steht, wobei $R_1$ und $R_2$ jeweils Wasserstoff, $C_1$—$C_5$-Alkyl, $C_1$—$C_4$-Halogenalkyl, $C_4$—$C_6$-Alkinyl, $C_4$—$C_6$-Halogenalkinyl, $C_3$—$C_6$-Alkenyl, $C_3$—$C_6$-Halogenalkenyl, gegebenenfalls durch Cyan substituiertes $C_3$—$C_6$-Alkoxycarboxyalkyl, gegebenenfalls durch Nitro substituiertes Phenyl oder Benzyl oder eine der Gruppen $C_2$—$C_4$-Alkylen—$NR_3R_4$ oder $C_2$—$C_4$-Alkylen—$N^{\oplus}R_3R_4R_5Z^{\ominus}$ und $R_3$, $R_4$ und $R_5$ jeweils $C_1$—$C_4$-Alkyl bedeuten oder $R_3$ und $R_4$ zusammen mit dem sie bindenden Stickstoffatom einen Pyrazolring bilden.

Von diesen Mischungskomponenten der Formel II sind wiederum die bevorzugt, in denen X für $-O-R_1$ oder $-S-R_2$ steht, wobei $R_1$ und $R_2$ Wasserstoff, $C_1$—$C_5$-Alkyl, $C_3$—$C_6$-Alkenyl oder $C_4$—$C_6$-Alkinyl bedeuten. Als Einzelvertreter seien besonders hervorgehoben: 4-(3',5'-Dichlorpyridyl-2'-oxy)-$\alpha$-phenoxy-propionsäure sowie deren Methyl-, Äthyl-, Propyl- und Butylester sowie dieselben Derivate der entsprechenden Thiopropionsäure.

Bevorzugter Mischungspartner des Typs I ist 3-(4-Isopropylphenyl)-1,1-dimethylharnstoff (I a).

Es hat sich nun überraschenderweise gezeigt, daß eine mengenmäßig in bestimmten Grenzen variable Kombination der beiden Wirkstoffklassen I und II eine synergistische Wirkung entfaltet, die die Mehrzahl aller wichtigen Getreideunkräuter zu bekämpfen vermag, ohne die Getreidekultur zu schädigen. Es werden die Hauptunkräuter der Getreidekulturen, wie Arten der Dikotyledonengattung Chrysanthemum und Sinapis sowie gewisse Avena-Arten (Wildhafer) selektiv in den aufgelaufenen Kulturen vernichtet.

Es ist überraschend, daß die Kombination eines Wirkstoffes der Formeln I a oder I b mit einem Wirkstoff der Formeln II nicht nur eine prinzipiell zu erwartende additive Ergänzung des Wirkungsspektrums auf die üblichen mit Getreide vergesellschafteten Unkräuter hervorruft, sondern daß sie einen synergistischen Effekt erzielt, der die Wirkungsgrenzen beider Präparate unter zwei Aspekten erweitert.

Einmal werden die Aufwandmengen der Einzelverbindungen I a oder I b und II bei gleichbleibend guter Wirkung deutlich gesenkt. Zum anderen erzielt die kombinierte Mischung auch dort noch einen hohen Grad der Unkraut-Bekämpfung, wo beide Einzelverbindungen im Bereich allzu geringer Aufwandmengen wirkungslos geworden sind. Dies hat eine wesentliche Verbreiterung des Unkrautspektrums und eine zusätzliche Erhöhung der Sicherheitsmarge auf die Getreidekultur zur Folge, wie sie für unbeabsichtigte Wirkstoffüberdosierung notwendig und erwünscht ist.

Das erfindungsgemäße Mittel kann außer in Getreidekulturen wie Gerste, Roggen und insbesondere Weizen auch zur selektiven Unkrautbekämpfung in anderen monokotylen Kulturen ähnlicher Wirkstoffempfindlichkeit mit ähnlichem Umkrautbestand eingesetzt werden, wie z. B. Mais und Reis.

Die Zugabe der Harnstoffkomponente I zu den Wirkstoffen der Formel II, ermöglicht den selektiven Einsatz des erfindungsgemäßen Mittels auch in durch Gräser stark verunkrauteten Getreidekulturen, da es durch den synergistischen Effekt gegen die Unkräuter möglich ist, die Aufwandmengen so weit zu senken, daß eine Schädigung der Kulturpflanzen ausgeschlossen ist.

Mit dem erfindungsgemäßen Mittel lassen sich postemergent beispielsweise folgende Unkräuter in Winter-, Sommer- und Hartweizen, Winter- und Sommerroggen und -gerste gut bekämpfen:

Avena fatua, Avena ludoviciana, Avena sterilis, Alopecurus myosuroides, Echinochloa crus-galli, verschiedene Lolium-, Setaria-, Phalaris- und Poa-Spezies sowie Chrysanthemum- und Sinapis-Arten.

Das Mischungsverhältnis zwischen Komponente I und II im erfindungsgemäßen Mittel ist nicht besonders kritisch und kann zwischen 20 : 1 und 1 : 10 schwanken. Bevorzugt sind Mischungen mit einem Überschuß der Harnstoffkomponente, also 20 : 1 bis 1 : 1, insbesondere aber 10 : 1 bis 4 : 1. Die Gesamtaufwandmenge beider Wirkstoffe zusammen beträgt 0,1 bis 4 kg/ha, vorzugsweise 0,25 bis 1,5 kg/ha.

In einem solchen Konzentrationsbereich der Anwendung des erfindungsgemäßen Mittels läßt sich praktisch keine oder nur geringe Schadwirkung auf die Getreidekulturen feststellen, während Ungräser und Unkräuter schon bei niedrigen Konzentrationen praktisch total absterben.

Vorliegende Erfindung betrifft auch die Verwendung des erfindungsgemäßen Mittels, also ein Verfahren zur selektiven Ungras- und Unkrautbekämpfung in Getreide unter post-emergenter Anwendung des Mittels.

Das erfindungsgemäße Mittel mit der neuen Wirkstoffkombination enthält neben den genannten Wirkstoffen noch geeignete Träger- und/oder andere Zuschlagstoffe. Diese können fest oder flüssig sein und entsprechen den in der Formulierungstechnik üblichen Stoffen wie z. B. natürlichen oder regenerierten mineralischen Stoffen, Lösungs-, Dispergier-, Netz-, Haft-, Verdickungs-, Bindemittel oder Düngemitteln. Geeignete Anwendungsformen sind daher z. B. Emulsionskonzentrate, direkt versprühbare oder verdünnbare Lösungen, verdünnte Emulsionen, Spritzpulver, lösliche Pulver, Stäubemittel, Granulate, auch Verkapselungen in z. B. polymeren Stoffen. Die Anwendungsverfahren wie Versprühen, Vernebeln, Verstäuben, Verstreuen oder Gießen werden gleich wie die Art der Mittel den angestrebten Zielen und den gegebenen Verhältnissen entsprechend gewählt.

Die Formulierungen, d. h. die das erfindungsgemäße Wirkstoffgemisch und gegebenenfalls einen festen oder flüssigen Zusatzstoff enthaltenden Mittel, Zubereitungen oder Zusammensetzungen werden in bekannter Weise hergestellt, z. B. durch inniges Vermischen und/oder Vermahlen der Wirkstoffe mit Streckmitteln, wie z. B. mit Lösungsmitteln, festen Trägerstoffen, und gegebenenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z. B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole sowie deren Äther und Ester, wie Äthanol, Äthylenglykol, Äthylenglykolmonomethyl- oder -äthyläther, Ketone wie Cyclohexanon, stark polare Lösungsmittel wie N-Methyl-2-pyrrolidon, Dimethylsulfoxid oder Dimethylformamid, sowie gegebenenfalls epoxidierte Pflanzenöle wie epoxidiertes Kokosnußöl oder Sojaöl; oder Wasser.

Als feste Trägerstoffe, z. B. für Stäubemittel und dispergsierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen, wie z. B. Bimsstein, Ziegelbruch, Sepiolit oder Bentonit, als nicht sorptive Trägermaterialien z. B. Calcit oder Sand in Frage. Darüber hinaus kann eine Vielzahl von vorgranulierten Materialien anorganischer oder organischer Natur wie insbesondere Dolomit oder zerkleinerte Pflanzenrückstände verwendet werden.

Als oberflächenaktive Verbindungen kommen nichtionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sog. wasserlösliche Seifen als auch wasserlösliche synthetische oberflächenaktive Verbindungen sein.

Als Seifen seien die Alkali-, Erdalkali- oder gegebenenfalls substituierte Ammoniumsalze von höheren Fettsäuren ($C_{10}$—$C_{22}$), wie z. B. die Na- oder K-Salze der Öl- oder Stearinsäure, oder von natürlichen Fettsäuregemischen, die z. B. aus Kokosnuß- oder Talgöl gewonnen werden können, genannt. Ferner sind auch die Fettsäuremethyl-taurinsalze zu erwähnen.

Häufiger werden jedoch sogenannte synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali-, Erdalkali- oder gegebenenfalls substituierte Ammoniumsalze vor und weisen einen Alkylrest mit 8 bis 22 C-Atomen auf, wobei Alkyl auch den Alkylteil von Acylresten einschließt, z. B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Äthylenoxid-Addukten. Die sulfonierten Benzimidazolderivate enthalten vorzugsweise 2-Sulfonsäuregruppen und einen Fettsäurerest mit 8—22 C-Atomen. Alkylarylsulfonate sind z. B. die Na-, Ca- oder Triäthanolaminsalze der Dodecylbenzolsulfonsäure, der Dibutylnaphthalinsulfonsäure, oder eines Naphthalinsulfonsäure-Formaldehydkondensationsproduktes.

Ferner kommen auch entsprechende Phosphate wie z. B. Salze des Phosphorsäureesters eines p-Nonylphenol-(4—14)-Äthylenoxid-Adduktes in Frage.

Als nichtionische Tenside kommen in erster Linie Polyglykolätherderivate von aliphatischen oder cycloaliphatischen Alkoholen, gesättigten oder ungesättigten Fettsäuren und Alkylphenolen in Frage, die 3 bis 30 Glykoläthergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Äthylenglykoläthergruppen und 10 bis 100 Propylenglykoläthergruppen enthaltenden Polyäthylenoxidaddukte an Polypropylenglykol, Äthylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Äthylenglykoleinheiten.

Als Beispiele nichtionischer Tenside seien Nonylphenolpolyäthoxyäthanole, Ricinusölpolyglykoläther, Polypropylen-Polyäthylenoxidaddukte, Tributylphenoxypolyäthoxyäthanol, Polyäthylenglykol und Octylphenoxypolyäthoxyäthanol erwähnt.

Ferner kommen auch Fettsäureester von Polyoxyäthylensorbitan wie das Polyoxyäthylensorbitan in Betracht.

Bei den kationischen Tensiden handelt es sich vor allem um quartäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Äthylsulfate vor, z. B. das Stearyltrimethylammoniumchlorid oder das Benzyldi(2-chloräthyl)äthylammoniumbromid.

Die in der Formulierungstechnik gebräuchlichen Tenside sind u. a. in folgenden Publikationen beschrieben:

»Mc Cutcheon's Detergens and Emulsifiers Annual« MC Publishing Corp., Ridgewood, New Jersey, 1979.

Sisely and Wood, »Encyclopedia of Surface Active Agents, Chemical Publishing Co., Ins. New York, 1964.

Der Wirkstoffgehalt in handelsfähigen Mitteln liegt zwischen 0,1 und 95 Gewichtsprozent, vorzugsweise 1 bis 80 Gewichtsprozent.

Insbesondere setzen sich bevorzugte Formulierungen folgendermaßen zusammen: (% = Gewichtsprozent)

Lösungen

| | |
|---|---|
| Aktiver Wirkstoff: | 5 bis 95%, vorzugsweise 10 bis 80% |
| Lösungsmittel: | 95 bis 5%, vorzugsweise 90 bis 0% |
| oberflächenaktives Mittel: | 1 bis 30%, vorzugsweise 2 bis 20% |

Emulgierbare Konzentrate

| | |
|---|---|
| Aktiver Wirkstoff: | 10 bis 50%, bevorzugt 10 bis 40% |
| oberflächenaktives Mittel: | 5 bis 40%, bevorzugt 10 bis 20% |
| flüssiges Trägermittel: | 20 bis 93%, vorzugsweise 40 bis 80% |

Stäube

| | | |
|---|---|---|
| Aktiver Wirkstoff: | 0,5 bis 10%, vorzugsweise 2 bis 8% | |
| festes Trägermaterial: | 99,5 bis 90%, vorzugsweise 98 bis 92% | |

Suspensions-Konzentrate

| | |
|---|---|
| Aktiver Wirkstoff: | 5 bis 75%, vorzugsweise 10 bis 50% |
| Wasser: | 94 bis 25%, vorzugsweise 90 bis 30% |
| oberflächenaktives Mittel: | 1 bis 40%, vorzugsweise 2 bis 30% |

Benetzbare Pulver

| | |
|---|---|
| Aktiver Wirkstoff: | 5 bis 90%, vorzugsweise 10 bis 80% und insbesondere 20 bis 60% |
| oberflächenaktives Mittel: | 0,5 bis 20%, vorzugsweise 1 bis 15% |
| festes Trägermittel: | 5 bis 90%, vorzugsweise 30 bis 70% |

Granulate

| | |
|---|---|
| Aktiver Wirkstoff: | 0,5 bis 30%, vorzugsweise 3 bis 15% |
| festes Trägermittel: | 99,5 bis 70%, vorzugsweise 97 bis 85% |

Während als Handelsware eher konzentrierte Mittel bevorzugt werden, verwendet der Endverbraucher in der Regel verdünnte Mittel. Die Anwendungsformen können bis hinab zu 0,001% an Wirkstoff verdünnt werden.

Den beschriebenen erfindungsgemäßen Mitteln lassen sich andere biozide Wirkstoffe oder Mittel beimischen. So können die neuen Mittel außer den genannten Verbindungen der allgemeinen Formel I und der Formel II z. B. Insektizide, Fungizide, Bakterizide, Fungistatika, Bakeriostatika oder Nematizide zur Verbreiterung des Wirkungsspektrums enthalten.

Im einzelnen seien folgende Pyridyloxyphenoxyalkancarbonsäurederivate der Formel II als Mischpartner für die Phenylharnstoffe der Formeln I a und I b aufgelistet:

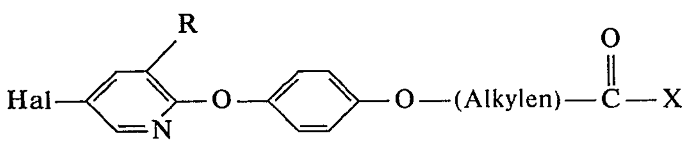

| Nr. | Hal | R | Alkylen | X |
|---|---|---|---|---|
| 1 | Cl | Cl | $-CH(CH_3)-$ | $-S-CH_2-CH=CH_2$ |
| 2 | Cl | Cl | $-CH(CH_3)-$ | $-S-CH_2-COOCH_3$ |
| 3 | Cl | Cl | $-CH(CH_3)-$ | $-SH$ |
| 4 | Cl | Cl | $-CH(CH_3)-$ | $-NH-(CH_2)_3-OCH_3$ |
| 5 | Cl | Cl | $-CH(CH_3)-$ | $-N(C_2H_5)_2$ |
| 6 | Cl | Cl | $-CH(CH_3)-$ | $-NH_2$ |
| 7 | Cl | Cl | $-CH(CH_3)-$ | $-NH-(CH_2)_2-OC_2H_5$ |
| 8 | Cl | Cl | $-CH(CH_3)-$ | $-O-CH_2-CH_2-CN$ |
| 9 | Cl | Cl | $-CH(CH_3)-$ | $-O-CH(CH_3)-CN$ |
| 10 | Cl | Cl | $-CH(CH_3)-$ | $-O-(CH_2)_2-N(CH_3)_2$ |
| 11 | Cl | Cl | $-CH(CH_3)-$ | $-S-CH_3$ |
| 12 | Cl | Cl | $-CH(CH_3)-$ | $-S-CH_2-CH_2Cl$ |
| 13 | Cl | Cl | $-CH(CH_3)-$ | $-S-CH_2-CN$ |
| 14 | Cl | Cl | $-CH(CH_3)-$ | $-S-CH_2-C(CH_3)=CH_2$ |

Fortsetzung

| Nr. | Hal | R | Alkylen | X |
|---|---|---|---|---|
| 15 | Cl | Cl | $-CH(CH_3)-$ | $-S-(CH_2)_2-N(C_2H_5)_2$ |
| 16 | Cl | Cl | $-CH(CH_3)-$ | $-S-(CH_2)_2-N^{\oplus}(C_2H_5)_2CH_3J^{\ominus}$ |
| 17 | Cl | H | $-CH(CH_3)-$ | $-O-C_2H_5$ |
| 18 | Cl | Cl | $-CH(CH_3)-$ | $-O-N=C(CH_3)_2$ |
| 19 | Cl | Cl | $-CH(CH_3)-$ | $-S-4-Cl-C_6H_4$ |
| 20 | Cl | Cl | $-CH(CH_3)-$ | $-S-C_6H_5$ |
| 21 | Cl | Cl | $-CH(CH_3)-$ | $-NH-CH_2-CH_2-Cl$ |
| 22 | Cl | Cl | $-CH(CH_3)-$ | $-NH-CH_2-CH_2-OCH_3$ |
| 23 | Cl | H | H | $-S-C_2H_5$ |
| 24 | Cl | Cl | $-CH(CH_3)-(CH_2)_2-$ | $-O-CH_3$ |
| 25 | Cl | Cl | $-CH(CH_3)-(CH_2)_2-$ | $-O-C_2H_5$ |
| 26 | Cl | Cl | $-CH(CH_3)-$ | $-O-C(CH_3)_2-CN$ |
| 27 | Cl | Cl | $-CH(CH_3)-$ | $-NH-CH_2-CH_2-OH$ |
| 28 | Cl | Cl | $-CH(CH_3)-$ | $-O-C_3H_7(i)$ |
| 29 | Cl | Cl | $-CH(CH_3)-$ | $-NH-CH_2-COOH$ |
| 30 | Cl | Cl | $-CH(CH_3)-$ | $-S-(CH_2)_2-CH=CH_2$ |
| 31 | Cl | Cl | $-CH(CH_3)-$ | $-S-(CH_2)_2-CN$ |
| 32 | Cl | Cl | $-CH(CH_3)-$ | $-S-(CH_2)_3-CN$ |
| 33 | Cl | Cl | $-CH(CH_3)-$ | $-O-(CH_2)_2-CN$ |
| 34 | Cl | Cl | $-CH(CH_3)-$ | $-S-CH_2-CH_2-OH$ |
| 35 | Cl | Cl | $-CH(CH_3)-$ | $-S-CH_2-CH(CH_3)-OH$ |
| 36 | Cl | Cl | $-CH(CH_3)-$ | $-S-CH_2-CH=CH-Cl$ |
| 37 | Cl | Cl | $-CH(CH_3)-$ | $-S-CH_2-Cl$ |
| 38 | Cl | Cl | $-CH(CH_3)-$ | $-S-CH_2-4-CN-C_6H_4$ |
| 39 | Cl | Cl | $-CH(CH_3)-$ | $-S-CH_2-CH(CH_3)-CH_2-Cl$ |
| 40 | Cl | Cl | $-CH(CH_3)-$ | $-S-CH_2-CBr=CH_2$ |
| 41 | Cl | Cl | $-CH(CH_3)-$ | $-O-CH_2-CBr=CH_2$ |
| 42 | Cl | Cl | $-CH(CH_3)-$ | $-O-CH_2-CH=CH_2$ |
| 43 | Cl | Cl | $-CH(CH_3)-$ | $-O-CH_2-C_6H_5$ |
| 44 | Cl | Cl | $-CH(CH_3)-$ | $-S-CH_2-CH(CH_3)-C_6H_5$ |

Fortsetzung

| Nr. | Hal | R | Alkylen | X |
|---|---|---|---|---|
| 45 | Cl | Cl | $-CH(CH_3)-$ | $-S-CH_2-CH=CH-CH_3$ |
| 46 | Cl | Cl | $-CH(CH_3)-$ | $-S-CH(CH_3)-CN$ |
| 47 | Cl | Cl | $-CH(CH_3)-$ | $-S-CH_2-C\equiv C-CH_2-Cl$ |
| 48 | Cl | Cl | $-CH(CH_3)-$ | $-S-CH_2-CCl=CH-Cl$ |
| 49 | Cl | Cl | $-CH(CH_3)-$ | $-S-CH_2-CCl=CH_2$ |
| 50 | Cl | Cl | $-CH(CH_3)-$ | $-S-CH_2-CH=CCl-CH_3$ |
| 51 | Cl | Cl | $-CH(CH_3)-$ | $-O-N$ 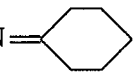 |
| 52 | Cl | Cl | $-CH(CH_3)-$ | $-O-CH_2-C\equiv C-CH_2-Cl$ |
| 53 | Cl | Cl | $-CH(CH_3)-$ | $-O-CH_2-CH=CH-Cl$ |
| 54 | Cl | Cl | $-CH(CH_3)-$ | $-O-(CH_3)_2-C\equiv CH$ |
| 55 | Cl | Cl | $-CH(CH_3)-$ | $-O-C(CH_3)(C_2H_5)-CH=CH_2$ |
| 56 | Cl | Cl | $-CH(CH_3)-$ | $-O-C(CH_3)_2-CH=CH_2$ |
| 57 | Cl | Cl | $-CH(CH_3)-$ | $-O-CH(CN)-C_2H_5$ |
| 58 | Cl | Cl | $-CH(CH_3)-$ | $-O-CH(C_3H_7\text{-}n)-C\equiv CH$ |
| 59 | Cl | Cl | $-CH(CH_3)-$ | $-O-C(CH_3)(C_2H_5)-C\equiv CH$ |
| 60 | Cl | Cl | $-CH(CH_3)-$ | $-O-C_6H_5$ |
| 61 | Cl | Cl | $-CH(CH_3)-$ | $-O-4-NO_2-C_6H_4$ |
| 62 | Cl | Cl | $-CH(CH_3)-$ | $-O-3-CH_3-4-NO_2-C_6H_3$ |
| 63 | Cl | Cl | $-CH(CH_3)-$ | $-S-CH_2-C_6H_5$ |
| 64 | Cl | Cl | $-CH(CH_3)-$ | $-S-CH(CH_3)=COOCH_3$ |
| 65 | Cl | Cl | $-CH(CH_3)-$ | $-O-CH(CH_3)-COOC_2H_5$ |
| 66 | Cl | Cl | $-CH(CH_3)-$ | $-O-(CH_2)_2-N(CH_2-CH=CH_2)_2$ |
| 67 | Cl | Cl | $-CH(CH_3)-$ | $-O-CH_2-CH_2-Cl$ |
| 68 | Cl | Cl | $-CH(CH_3)-$ | $-O-CH_2-3-NO_2-C_6H_4$ |
| 69 | Cl | Cl | $-CH(CH_3)-$ | $-O-CH_2-4-NO_2-C_6H_4$ |
| 70 | Cl | Cl | $-CH(CH_3)-$ | $-S-CH_2-2-NO_2-C_6H_4$ |
| 71 | Cl | Cl | $-CH(CH_3)-$ | $-S-CH_2-4-NO_2-C_6H_4$ |
| 72 | Cl | Cl | $-CH(CH_3)-$ | $-S-4-NO_2-C_6H_4$ |
| 73 | Cl | Cl | $-CH(CH_3)-$ | $-S-CH(-CO-CH_3)-COOC_2H_5$ |
| 74 | Cl | Cl | $-CH(CH_3)-$ | $-S-CH_2-CONH_2$ |

Fortsetzung

| Nr. | Hal | R | Alkylen | X |
|---|---|---|---|---|
| 75 | Cl | Cl | $—CH(CH_3)—$ | $—S—(CH_2)_2—COOC_2H_5$ |
| 76 | Cl | Cl | $—CH(CH_3)—$ | $—NH—CH_2—COOC_2H_5$ |
| 77 | Cl | Cl | $—CH(CH_3)—$ | $—NH—CH(CH_3)—CH_2—OCH_3$ |
| 78 | Cl | Cl | $—CH(CH_3)—$ | $—O—CH(—COOC_2H_5)_2$ |
| 79 | Cl | Cl | $—CH(CH_3)—$ | $—S—CH(CH_3)—CONH—C_2H_5$ |
| 80 | Cl | Cl | $—CH(CH_3)—$ | $—O—(CH_2)_2—$ 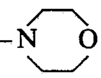 |
| 81 | Cl | Cl | $—CH(CH_3)—$ | $—O—(CH_2)_2—$ 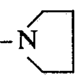 ·HCl |
| 82 | Cl | Cl | $—CH(CH_3)—$ | $—O—4—CN—C_6H_4$ |
| 83 | Cl | Cl | $—CH(CH_3)—$ | $—O—CH(—CO—CH_3)—COOC_2H_5$ |
| 84 | Cl | Cl | $—CH(CH_3)—$ | $—O—CH_2—CONH_2$ |
| 85 | Cl | Cl | $—CH(CH_3)—$ | $—O—CH_2—COOCH_3$ |
| 86 | Cl | Cl | $—CH(CH_3)—$ | $—S—(CH_2)_2—CONH_2$ |
| 87 | Cl | Cl | $—CH(CH_3)—$ | $—S—CH(CN)—COOC_2H_5$ |
| 88 | Cl | Cl | $—CH(CH_3)—$ | $—O—2—NO_2—4—NO_2—C_6H_3$ |
| 89 | Cl | Cl | $—CH(CH_3)—$ | $-O-2-CH_3-4-NO_2-6-NO_2-C_6H_2$ |
| 90 | Cl | Cl | $—CH(CH_3)—$ | $—S—CH_2—CH(CH_3)—CN$ |
| 91 | Cl | Cl | $—CH(CH_3)—$ | $—S—CH(COOC_2H_5)_2$ |
| 92 | Cl | Cl | $—CH(CH_3)—$ | $—O—(CH_2)_2—$ 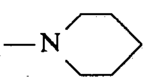 |
| 93 | Cl | Cl | $—CH(CH_3)—$ | $—O—(CH_2)_2—N(C_2H_5)_2$ |
| 94 | Cl | Cl | $—CH(CH_3)—$ | $—O—(CH_2)_2—$ 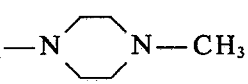 |
| 95 | Cl | Cl | $—CH(CH_3)—$ | $—O—(CH_2)_2—NH—C_4H_9(t)$ |
| 96 | Cl | Cl | $—CH(CH_3)—$ | $—O—(CH_2)_2—N(—CH_2—CH_2—OH)_2$ |
| 97 | Cl | Cl | $—CH(CH_3)—$ | $—O—(CH_2)_2—N(CH_3)—C_3H_7(i)$ |
| 98 | Cl | Cl | $—CH(CH_3)—$ | 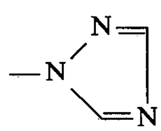 |
| 99 | Cl | Cl | $—CH(CH_3)—$ | 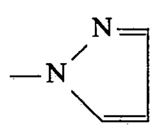 |

Fortsetzung

| Nr. | Hal | R | Alkylen | X |
|---|---|---|---|---|
| 100 | Cl | Cl | $-CH(CH_3)-$ | 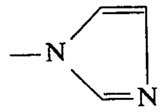 |
| 101 | Cl | Cl | $-CH(CH_3)-$ | 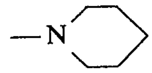 |
| 102 | Cl | Cl | $-CH(CH_3)-$ | $-O-(CH_2)_2-N(CH_3)-CO-CH_3$ |
| 103 | Cl | Cl | $-CH(CH_3)-$ | $-O-(CH_2)_2-NH-CO-CH_3$ |
| 104 | Cl | Cl | $-CH(CH_3)-$ | $-OCH_3$ |
| 105 | 3 | Cl | $-CH(CH_3)-$ | $-O-CH_2-C\equiv CH$ |
| 106 | 3 | Cl | $-CH(CH_3)-$ | $-OCH_3$ |
| 107 | Cl | Cl | $-CH(CH_3)-$ | $-O-C_4H_9(n)$ |
| 108 | Cl | Cl | $-CH(CH_3)-$ | $-OCH_3$ |
| 109 | Cl | Cl | $-CH(CH_3)-$ | $-OH$ |
| 110 | Cl | Cl | $-CH(CH_3)-$ | $-O-C_4H_9(i)$ |

Ein synergistischer Effekt liegt bei Herbiziden immer dann vor, wenn die herbizide Wirkung der Wirkstoffkombination I + II größer ist als die Summe aus der Wirkung der einzeln applizierten Wirkstoffe.

Das zu erwartende Pflanzenwachstum E für eine gegebene Kombination zweier Herbizide kann (vgl. COLBY, S. R., »Calculating synergistic and antagonistic response of herbicide combinations«, Weeds 15, Seiten 20—22, 1967) wie folgt berechnet werden:

$$E = \frac{X \cdot Y}{100}$$

Dabei bedeuten:

X = Prozent Wachstum (im Vergleich zu unbehandelten Pflanzen) bei Behandlung mit einem Herbizid I mit p kg Aufwandmenge pro Hektar,
Y = Prozent Wachstum bei Behandlung mit einem Herbizid II mit q kg Aufwandmenge pro Hektar,
E = Erwartetes Wachstum in Prozent zu den Kontrollpflanzen nach Behandlung mit Herbizidgemisch I + II bei einer Aufwandmenge von p + q kg Wirkstoffmenge pro Hektar.

Ist der tatsächlich beobachtete Wert niedriger als der zu erwartende Wert E, so liegt Synergismus vor.

Der synergistische Effekt der Kombination der Wirkstoffe I und II wird in den folgenden Beispielen 2 und 3 demonstriert.

Um hierbei die synergistische Wirkung der Wirkstoffkombination besser hervorzuheben, ist das biologische Beispiel 2 mit Aufwandmengen durchgeführt worden, die an der unteren Grenze der Aktivität gegen die ausgewählten Modelltestpflanze Avena fatua unter Gewächshausbedingungen liegen. In der Regel, d. h. bei Anwendung in der Praxis, liegen die Aufwandmengen höher, womit gleichzeitig eine weitergehende Schädigung der Unkräuter erreicht wird, ohne daß dabei die Kulturpflanze geschädigt wird (vgl. Beispiel 3).

Formulierungsbeispiele

Beispiel 1

Formulierungsbeispiele für synergistische Wirkstoffgemische der Formeln I und II
(% = Gewichtsprozent)

a) Spritzpulver

| | a) | b) | c) | d) |
|---|---|---|---|---|
| Wirkstoff I a oder I b | 10% | 20% | 5% | 30% |
| einer der Wirkstoffe II | 10% | 40% | 15% | 30% |
| Na-Ligninsulfonat | 5% | 5% | 5% | 5% |
| Na-Laurylsulfat | 3% | – | 3% | – |
| Na-Diisobutylnaphthalinsulfonat | – | 6% | – | 6% |
| Octylphenolpolyäthylenglykoläther 7–8 Mol AeO | – | 2% | – | 2% |
| Hochdisperse Kieselsäure | 5% | 27% | 5% | 27% |
| Kaolin | 67% | – | 67% | – |

Das Wirkstoffgemisch wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

b) Emulsions-Konzentrat

| | a) | b) | c) |
|---|---|---|---|
| Wirkstoff I a oder I b | 5% | 5% | 12% |
| einer der Wirkstoffe II | 5% | 20% | 13% |
| Octylphenolpolyäthylenglykoläther (4–5 Mol AeO) | 3% | 3% | 3% |
| Ca-Dodecylbenzolsulfonat | 3% | 3% | 2% |
| Ricinusölpolyglykoläther (36 Mol AeO) | 4% | 4% | 4% |
| Cyclohexanon | 30% | 30% | 31% |
| Xylolgemisch | 50% | 35% | 35% |

Aus diesen Konzentraten können durch Verdünnen mit Wasser Emulsionen jeder gewünschten Konzentration hergestellt werden.

c) Stäubemittel

| | a) | b) | c) | d) |
|---|---|---|---|---|
| Wirkstoff I a oder I b | 2% | 4% | 2% | 4% |
| einer der Wirkstoffe II | 3% | 4% | 4% | 8% |
| Talkum | 95% | – | 94% | – |
| Kaolin | – | 92% | – | 88% |

Man erhält anwendungsfertige Stäubemittel, indem das Wirkstoffgemisch mit dem Träger vermischt und auf einer geeigneten Mühle vermahlen wird.

d) Extruder Granulat

| | a) | b) | c) |
|---|---|---|---|
| Wirkstoff I a oder I b | 5% | 3% | 5% |
| einer der Wirkstoffe II | 5% | 7% | 15% |
| Na-Ligninsulfonat | 2% | 2% | 2% |
| Carboxymethylcellulose | 1% | 1% | 1% |
| Kaolin | 87% | 87% | 77% |

Das Wirkstoffgemisch wird mit den Zusatzstoffen vermischt, vermahlen und mit Wasser angefeuchtet. Dieses Gemisch wird extrudiert und anschließend im Luftstrom getrocknet.

e) Umhüllungs-Granulat

| | a) | b) |
|---|---|---|
| Wirkstoff I a oder I b | 1,5% | 3% |
| einer der Wirkstoffe II | 1,5% | 5% |
| Polyäthylenglykol (MG 2000) | 3% | 3% |
| Kaolin | 94% | 89% |

Das fein gemahlene Wirkstoffgemisch wird in einem Mischer auf das mit Polyäthylenglykol angefeuchtete Kaolin gleichmäßig aufgetragen. Auf diese Weise erhält man staubfreie Umhüllungs-Granulate.

f) Suspensions-Konzentrat

| | a) | b) |
|---|---|---|
| Wirkstoff I a oder I b | 20% | 20% |
| einer der Wirkstoffe II | 20% | 40% |
| Äthylenglykol | 10% | 10% |
| Nonylphenolpolyäthylenglykoläther (15 Mol AeO) | 6% | 6% |
| Na-Ligninsulfonat | 10% | 10% |
| Carboxymethylcellulose | 1% | 1% |
| 37%ige wäßrige Formaldehyd-Lösung | 0,2% | 0,2% |
| Silikonöl in Form einer 75%igen wäßrigen Emulsion | 0,8% | 0,8% |
| Wasser | 32% | 12% |

Das fein gemahlene Wirkstoffgemisch wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

Beispiel 2

Die Testpflanzensamen werden in Plastiktöpfe, die 0,5 l sterilisierte Gartenerde enthalten, im Gewächshaus ausgesät. Nach dem Auflaufen werden die Pflanzen im 2- bis 3-Blattstadium mit einer wässerigen Dispersion der Wirkstoffkombination besprüht. Die Aufwandmenge an Dispersion beträgt 50 ml pro $m^2$. Nach 21 Tagen bei Tagestemperaturen von 18—22°C und Nachttemperaturen von 10—12°C, einer relativen Luftfeuchtigkeit von 60—70% und täglicher Bewässerung der Töpfe erfolgt die Auswertung.

Der Schädigungsgrad der Pflanzen wird linear nach folgendem Maßstab bewertet:

1: Pflanzen abgestorben
5: mittlere Wirkung
9: Normalzustand.

Testpflanzen: Avena fatua, Weizen »Farnese«
Aufwandmengen: 0,25 kg AS/ha Wirkstoff I
0,03 kg AS/ha Wirkstoff II.

Versuchsergebnisse (postemergent)

| | Avena fatua | | | Weizen | | |
|---|---|---|---|---|---|---|
| Mischungspartner I a, kg AS/ha | 0 | 0,25 | 0,25 | 0 | 0,25 | 0,25 |
| Mischungspartner II, kg AS/ha | 0,03 | 0 | 0,03 | 0,03 | 0 | 0,25 |
| Verbindungs-Nr. | | | | | | |
| 1 | 6 | 9 | 5 | 9 | 8 | 9 |
| 2 | 6 | 9 | 5 | 9 | 8 | 9 |
| 3 | 8 | 9 | 6 | 9 | 8 | 9 |

Fortsetzung

| | Avena fatua | | | Weizen | | |
|---|---|---|---|---|---|---|
| Mischungspartner I a, kg AS/ha | 0 | 0,25 | 0,25 | 0 | 0,25 | 0,25 |
| Mischungspartner II, kg AS/ha | 0,03 | 0 | 0,03 | 0,03 | 0 | 0,25 |
| Verbindungs-Nr. | | | | | | |
| 11 | 6 | 9 | 5 | 8 | 8 | 8 |
| 15 | 8 | 9 | 6 | 9 | 9 | 9 |
| 16 | 9 | 9 | 8 | 9 | 8 | 8 |
| 37 | 5 | 9 | 4 | 9 | 8 | 8 |
| 58 | 4 | 9 | 3 | 8 | 8 | 8 |
| 60 | 5 | 9 | 4 | 9 | 8 | 8 |
| 68 | 6 | 9 | 5 | 9 | 8 | 8 |
| 75 | 4 | 9 | 3 | 8 | 8 | 9 |
| 87 | 4 | 9 | 3 | 8 | 8 | 8 |
| 97 | 7 | 9 | 5 | 9 | 8 | 8 |
| 100 | 7 | 9 | 6 | 9 | 8 | 8 |

Zur Demonstration des synergistischen Effektes sind in der anschließenden Tabelle die gemessenen und nach Colby berechneten Wachstumswerte in Prozent aufgetragen. Da die beobachteten Wachstumswerte für Avena fatua stets kleiner sind als die nach Colby berechneten, liegt Synergismus vor.

| | Avena fatua | | Weizen | |
|---|---|---|---|---|
| Wirkstoffgemische von 0,25 kg Verb. I a/ha und 0,03 kg Verb. II/ha | Gemessener Wert | Erwarteter Wert | Gemessener Wert | Erwarteter Wert |
| Verbindungs-Nr. vom Typ II | | | | |
| 1 | 50 | 62 | 100 | 87 |
| 2 | 50 | 62 | 100 | 87 |
| 3 | 62 | 87 | 100 | 87 |
| 11 | 50 | 62 | 87 | 87 |
| 15 | 62 | 87 | 87 | 87 |
| 16 | 87 | 100 | 87 | 87 |

Fortsetzung

| Wirkstoffgemische von 0,25 kg Verb. I a/ha und 0,03 kg Verb. II/ha | Avena fatua Gemessener Wert | Avena fatua Erwarteter Wert | Weizen Gemessener Wert | Weizen Erwarteter Wert |
|---|---|---|---|---|
| 37 | 37 | 50 | 87 | 87 |
| 58 | 25 | 37 | 87 | 75 |
| 60 | 37 | 50 | 87 | 87 |
| 68 | 50 | 62 | 87 | 87 |
| 75 | 25 | 37 | 100 | 75 |
| 87 | 25 | 37 | 87 | 75 |
| 97 | 50 | 75 | 87 | 87 |
| 100 | 62 | 75 | 87 | 87 |

Beispiel 3

In der gleichen Versuchsanordnung wie im Beispiel 2 werden höhere Aufwandmengen der Wirkstoffgemische geprüft und ausgewertet.

Aufwandmengen: 0,5 kg AS/ha Wirkstoff I
0,06 kg AS/ha Wirkstoff II.

Versuchsergebnisse (postemergent)

| | Avena fatua | | | Weizen | | |
|---|---|---|---|---|---|---|
| Mischungspartner I a, kg AS/ha | 0 | 0,5 | 0,5 | 0 | 0,5 | 0,5 |
| Mischungspartner II, kg AS/ha | 0,06 | 0 | 0,06 | 0,06 | 0 | 0,06 |
| Verbindungs-Nr. | | | | | | |
| 107 | 7 | 3 | 1 | 9 | 8 | 9 |
| 108 | 9 | 3 | 1 | 9 | 8 | 9 |
| 109 | 9 | 3 | 1 | 9 | 8 | 9 |

Zur Demonstration des synergistischen Effektes sind in der anschließenden Tabelle die gemessenen und die nach Colby berechneten Wachstumswerte in Prozent aufgetragen. Da die beobachteten Wachstumswerte stets kleiner sind als die nach Colby berechneten, liegt Synergismus vor.

| Wirkstoffgemische von 0,5 kg Verb. I a/ha und 0,06 kg Verb. II/ha | Avena fatua Gemessener Wert | Avena fatua Erwarteter Wert | Weizen Gemessener Wert | Weizen Erwarteter Wert |
|---|---|---|---|---|
| Verbindungs-Nr. vom Typ II | | | | |
| 107 | 1 | 18 | 100 | 87 |
| 108 | 1 | 25 | 100 | 87 |
| 109 | 1 | 25 | 100 | 87 |

**Patentansprüche**

1. Synergistisches Mittel zur selektiven Unkrautbekämpfung, dadurch gekennzeichnet, daß es neben Träger- und/oder anderen Zuschlagstoffen als wirksame Komponente einerseits 3-(4-Isopropylphenyl)-1,1-dimethylharnstoff (I a) oder 3-(3-Chlor-4-methylphenyl)-1,1-dimethylharnstoff (I b) und andererseits ein Halogenpyridyloxy-phenoxy-alkancarbonsäurederivat der Formel II enthält,

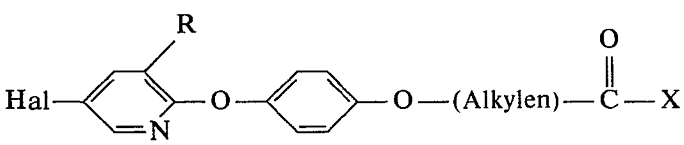

(II)

worin

Hal für Halogen,
R für Wasserstoff, Halogen oder $C_1$—$C_4$-Alkyl,
Alkylen für eine gesättigte, geradkettige oder verzweigte $C_2$—$C_4$-Alkylenkette und
X für eine der Gruppen $—O^{\ominus}Y^{\oplus}$, $—O—R_1$, $—S—R_2$, $—NR_3R_4$ oder $—O—N{=}CR_6R_7$ stehen, wobei
$R_1$ und $R_2$ jeweils Wasserstoff, $C_1$—$C_5$-Alkyl, $C_1$—$C_4$-Halogenalkyl, $C_2$—$C_6$-Halogenalkenyl, $C_2$—$C_6$-Alkenyl, $C_3$—$C_6$-Alkinyl, $C_3$—$C_6$-Halogenalkinyl, $C_2$—$C_4$-Carboxyalkyl, $C_1$—$C_4$-Cyanoalkyl, $C_1$—$C_4$-Hydroxyalkyl, $C_1$—$C_4$-Aminocarboxyalkyl, gegebenenfalls durch Cyan, —COO-Alkyl oder —CO-Alkyl substituiertes $C_3$—$C_6$-Alkoxycarboxyalkyl, gegebenenfalls durch Nitro, Cyan, Halogen oder $C_1$—$C_4$-Alkyl substituiertes Phenyl oder Phenylalkyl mit 1 bis 3 Kohlenstoffatomen im Alkylteil oder eine der Gruppen $C_2$—$C_4$-Alkylen—$NR_3R_4$ oder $C_2$—$C_4$-Alkylen—$N^{\oplus}R_3R_4R_5Z^{\ominus}$,
$R_3$ Wasserstoff, $C_1$—$C_4$-Alkyl, $C_3$—$C_5$-Alkoxyalkyl, $C_1$—$C_4$-Halogenalkyl, $C_2$—$C_4$-Carboxyalkyl, $C_3$—$C_6$-Alkoxycarboxyalkyl, $C_1$—$C_4$-Hydroxyalkyl oder —CO-Alkyl,
$R_4$ Wasserstoff, $C_1$—$C_4$-Alkyl, $C_2$—$C_4$-Alkenyl oder $C_1$—$C_4$-Hydroxyalkyl,
$R_5$ Wasserstoff oder $C_1$—$C_4$-Alkyl,
$R_6$ und $R_7$ jeweils $C_1$—$C_4$-Alkyl,
$Y^{\oplus}$ ein Alkali-, Erdalkali- oder Ammonium-Kation und
$Z^{\ominus}$ ein Halogenanion bedeuten, oder wobei
$R_3$ und $R_4$ zusammen mit dem sie bindenden Stickstoffatom einen Pyrrolidin-, Piperidin-, Morpholin-, Thiomorpholin-, Piperazin-, Pyrazol- oder Triazolring und
$R_6$ und $R_7$ zusammen mit dem sie bindenden Stickstoffatom einen Pyrrolidin- oder Piperidinring bilden können, unter Ausnahme der beiden Verbindungen 4-(3',5'-Dichlorpyridyl-2'-oxy)-$\alpha$-phenoxy-propionsäurepropargylester und 4-(3',5'-Dichlorpyridyl-2'-oxy)-$\alpha$-phenoxy-thiopropionsäurepropargylester.

2. Mittel gemäß Anspruch 1, dadurch gekennzeichnet, daß in der Mischungskomponente der Formel II Hal und R für Chlor stehen, Alkylen die Gruppe $—CH(CH_3)—$ verkörpert und X für $—OR_1$, $—S—R_2$ oder $—NR_3R_4$ steht, wobei $R_1$ und $R_2$ jeweils Wasserstoff, $C_1$—$C_5$-Alkyl, $C_1$—$C_4$-Halogenalkyl, $C_4$—$C_6$-Alkinyl, $C_4$—$C_6$-Halogenalkinyl, $C_3$—$C_6$-Alkenyl, $C_3$—$C_6$-Halogenalkenyl, gegebenenfalls durch Cyan substituiertes $C_3$—$C_6$-Alkoxycarboxyalkyl, gegebenenfalls durch Nitro substituiertes Phenyl oder Benzyl oder eine der Gruppen $C_2$—$C_4$-Alkylen—$NR_3R_4$ oder $C_2$—$C_4$-Alkylen—$N^{\oplus}R_3R_4R_5Z^{\ominus}$ und $R_3$, $R_4$ und $R_5$ jeweils

$C_1$—$C_4$-Alkyl bedeuten oder $R_3$ und $R_4$ zusammen mit dem sie bindenden Stickstoffatom einen Pyrazolring bilden.

3. Mittel gemäß Anspruch 2, dadurch gekennzeichnet, daß in der Mischungskomponente der Formel II X für —$OR_1$ oder —S—$R_2$ steht, wobei $R_1$ und $R_2$ Wasserstoff, $C_1$—$C_5$-Alkyl, $C_3$—$C_6$-Alkenyl oder $C_3$—$C_6$-Alkinyl bedeuten.

4. Mittel gemäß Anspruch 1, dadurch gekennzeichnet, daß die Mischungskomponente der Formel II 4-(3′,5′-Dichlorpyridyl-2′-oxy)-α-phenoxypropionsäure oder deren Methyl-, Äthyl-, Propyl- und Butylester sowie dieselben Derivate der entsprechenden Thiopropionsäure bedeutet.

5. Mittel gemäß einem der Ansprüche 1 bis 4, dadurch gekennzeichnet, daß die Mischungskomponente I durch 3-(4-Isopropylphenyl)-1,1-dimethylharnstoff (I a) verkörpert ist.

6. Mittel gemäß einem der Patentansprüche 1 bis 5, dadurch gekennzeichnet, daß im genannten Mittel die Komponente (I) gegenüber der Komponente (II) in etwa gleichem Gewichtsverhältnis oder im Überschuß vorhanden ist.

7. Mittel gemäß Patentanspruch 6, dadurch gekennzeichnet, daß das Gewichtsverhältnis zwischen Komponente (I) und Komponente (II) 1 : 1 bis 20 : 1, vorzugsweise 4 : 1 bis 10 : 1 beträgt.

8. Verfahren zur selektiven Unkrautbekämpfung in Getreide, dadurch gekennzeichnet, daß man verunkrautete Getreidekulturen post-emergent mit einer wirksamen Menge eines Mittels gemäß einem der Patentansprüche 1 bis 7 behandelt.

9. Verfahren gemäß Patentanspruch 8, dadurch gekennzeichnet, daß man Getreidekulturen, welche als Unkräuter Dikotyledonen der Gattung Chrysanthemum und Sinapis sowie als Monokotyledonen Alopecurus myosuroides, Echinochloa crus galli sowie Gräser der Gattung Lolium, Setaria, Phalaris, Poa und Wildhaferarten enthalten, mit den genannten Mitteln behandelt.

10. Verfahren gemäß Ansprüchen 8 und 9, dadurch gekennzeichnet, daß man die Getreidekultur mit dem genannten Mittel in Aufwandmengen behandelt, die 0,1 bis 4 kg, vorzugsweise 0,25 bis 1,5 kg Totalwirkstoffe pro Hektar entsprechen.

11. Verfahren gemäß Ansprüchen 8 bis 10, dadurch gekennzeichnet, daß die Getreidearten Sommer-, Winter- und Hartweizen, Winter- und Sommerroggen und -gerste sind.

## Claims

1. A synergistic composition for selectively controlling weeds, which composition contains as active ingredients, on the one hand, 3-(4-isopropylphenyl)-1,1-dimethylurea (I a) or 3-(3-chloro-4-methylphenyl)-1,1-dimethylurea (I b), and, on the other hand, a halopyridyloxyphenoxyalkanecarboxylic acid derivative of the formula II

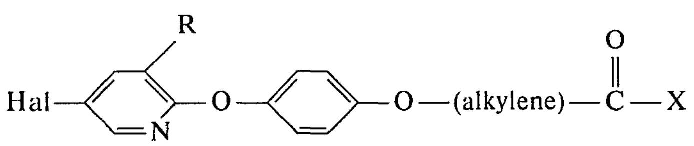

(II)

wherein

| | |
|---|---|
| Hal | is halogen, |
| R | is hydrogen, halogen or $C_1$—$C_4$alkyl, |
| alkylene | is a saturated, straight chain or branched $C_2$—$C_4$alkylene chain, |
| X | is any one of the groups —$O^{\ominus}Y^{\oplus}$, —O—$R_1$, —S—$R_2$, —$NR_3R_4$ or —O—N=$CR_6R_7$, where |

| | |
|---|---|
| $R_1$ and $R_2$ | are each hydrogen, $C_1$—$C_5$alkyl, $C_1$—$C_4$haloalkyl, $C_2$—$C_6$haloalkenyl, $C_2$—$C_6$alkenyl, $C_3$—$C_6$alkynyl, $C_3$—$C_6$haloalkynyl, $C_2$—$C_4$carboxyalkyl, $C_1$—$C_4$cyanoalkyl, $C_1$—$C_4$hydroxyalkyl, $C_1$—$C_4$aminocarboxyalkyl, $C_3$—$C_6$alkoxycarboxyalkyl unsubstituted or substituted by cyano, —COO-alkyl or —CO-alkyl, or $R_1$ and $R_2$ are each phenyl or phenylalkylhaving 1 to 3 carbon atoms in the alkyl moiety, the phenyl or phenylalkyl each being unsubstituted or substituted by nitro, cyano, halogen or $C_1$—$C_4$alkyl, or $R_1$ and $R_2$ are one of the groups $C_2$—$C_4$alkylene-$NR_3R_4$ or $C_2$—$C_4$alkylene—$N^{\oplus}R_3R_4R_5Z^{\ominus}$, |
| $R_3$ | is hydrogen, $C_1$—$C_4$alkyl, $C_3$—$C_5$alkoxyalkyl, $C_1$—$C_4$haloalkyl, $C_2$—$C_4$carboxyalkyl, $C_3$—$C_6$alkoxycarboxyalkyl, $C_1$—$C_4$hydroxyalkyl or —CO-alkyl, |
| $R_4$ | is hydrogen, $C_1$—$C_4$alkyl, $C_2$—$C_4$alkenyl or $C_1$—$C_4$hydroxyalkyl, |
| $R_5$ | is hydrogen or $C_1$—$C_4$alkyl, |
| $R_6$ and $R_7$ | are each $C_1$—$C_4$alkyl, |
| $Y^{\oplus}$ | is a cation of an alkali metal or alkaline earth metal or of ammonium, |
| $Z^{\ominus}$ | is a halogen anion, or wherein |
| $R_3$ and $R_4$ | together with the nitrogen atom to which they are attached can form a pyrrolidine, |

piperidine, morpholine, thiomorpholine, piperazine, pyrazole or triazole ring, and

$R_6$ and $R_7$ together with the nitrogen atom to which they are attached can form a pyrrolidine or piperidine ring, with the exception of the two compounds: propargyl 4-(3',5'-dichloropyridyl-2'-oxy)-$\alpha$-phenoxypropionate and propargyl 4-(3',5'-dichloropyridyl-2'-oxy)-$\alpha$-phenoxythiopropionate, together with carriers and/or other adjuvants.

2. A composition according to claim 1, wherein, in the mixture component of the formula II, Hal and R are chlorine, alkylene is the $-CH(CH_3)-$ group, and X is $-OR_1$, $-S-R_2$ or $NR_3R_4$, in which $R_1$ and $R_2$ are each hydrogen, $C_1-C_5$alkyl, $C_1-C_4$haloalkyl, $C_4-C_6$alkynyl, $C_4-C_6$haloalkynyl, $C_3-C_6$alkenyl, $C_3-C_6$haloalkenyl, $C_3-C_6$alkoxycarboxyalkyl unsubstituted or substituted by cyano, or $R_1$ and $R_2$ are each phenyl or benzyl each unsubstituted or substituted by nitro, or are one of the groups $C_2-C_4$alkylene$-NR_3R_4$ or $C_2-C_4$alkylene$-N^{\oplus}R_3R_4R_5Z^{\ominus}$, and $R_3$, $R_4$ and $R_5$ are each $C_1-C_4$alkyl, or $R_3$ and $R_4$ together with the nitrogen atom to which they are attached form a pyrazole ring.

3. A composition according to claim 2, wherein, in the mixture component of the formula II, X is $-OR_1$ or $-S-R_2$, wherein $R_1$ and $R_2$ are each hydrogen, $C_1-C_5$alkyl, $C_3-C_6$alkenyl or $C_4-C_6$alkynyl.

4. A composition according to claim 1, wherein the mixture component of the formula II is 4-(3',5'-dichloropyridyl-2'-oxy)-$\alpha$-phenoxypropionic acid, or a methyl, ethyl, propyl or butyl ester thereof, or a methyl, ethyl, propyl or butyl ester of the corresponding thiopropionic acid.

5. A composition according to any one of claims 1 to 4, wherein the mixture component I is 3-(4-isopropylphenyl)-1,1-dimethylurea (I a).

6. A composition according to any one of claims 1 to 5, wherein the component (I) is in approximately the same weight ratio as the component (II), or is present in excess.

7. A composition according to claim 6, wherein the weight ratio of component (I) to component (II) is 1 : 1 to 20 : 1, preferably 4 : 1 to 10 : 1.

8. A method of selectively controlling weeds in crops of cereals, which method comprises treating weed-infested crops of cereals, post-emergence with an effective amount of a composition according to any one of claims 1 to 7.

9. A method according to claim 8, which method comprises treating crops of cereals infested with dicot weeds of the species Chrysanthemum and Sinapis, monocot weeds of the species Alopecurus myosuroides and Echinochloa crus galli, as well as grasses of the species Lolium, Setaria, Phalaris, Poa and wild oat varieties with a compound as claimed therein.

10. A method according to either of claims 8 and 9, which method comprises treating the crops of cereals with a composition as claimed therein at rates of application corresponding to 0,1 to 4 kg, preferably 0,25 to 1,5 kg, of active ingredients per hectare.

11. A method according to any one of claims 8 to 10, wherein the cereal varieties are summer, winter and hard wheat, and winter and summer rye and barley.

## Revendications

1. Agent synergique pour la lutte sélective contre les mauvaises herbes, caractérisé en ce qu'il contient, outre des supports et/ou autres additifs, comme composant actif d'une part la 3-(4-isopropylphényl)-1,1-diméthylurée (I a) ou la 3-(3-chloro-4-méthylphényl)-1,1-diméthylurée (I b) et d'autre part un dérivé d'acide halogènepyridyloxy-phénoxy-alcanecarboxylique de formule II

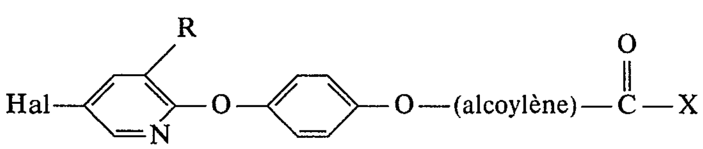

(II)

où

Hal représente un halogène,

R représente un hydrogène, un halogène ou un alcoyle en $C_1$ à $C_4$,

Alcoylène représente une chaîne alcoylène en $C_2$ à $C_4$ droite ou ramifiée saturée et

X représente l'un des groupes $-O^{\ominus}Y^{\oplus}$, $-O-R_1$, $-S-R_2$, $-NR_3R_4$ ou $-O-N{=}CR_6R_7$, où

$R_1$ et $R_2$ représentent chacun un hydrogène, un alcoyle en $C_1$ à $C_5$, un halogénalcoyle en $C_1$ à $C_4$, un halogénalcényle en $C_2$ à $C_6$, un alcényle en $C_2$ à $C_6$, un alcynyle en $C_3$ à $C_6$, un halogénalcynyle en $C_3$ à $C_6$, un carboxyalcoyle en $C_2$ à $C_4$, un cyanoalcoyle en $C_1$ à $C_4$, un hydroxyalcoyle en $C_1$ à $C_4$, un aminocarboxyalcoyle en $C_1$ à $C_4$, un alcoxycarboxyalcoyle en $C_3$ à $C_6$ éventuellement substitué par un cyano, un $-COO$-alcoyle ou un $-CO$-alcoyle, un phényle éventuellement substitué par un nitro, un cyano, un halogène ou un alcoyle en $C_1$ à $C_4$ ou un phénylalcoyle en $C_1$ à $C_3$ dans la

fraction alcoyle ou l'un des groupes alcoylène en $C_2$ à $C_4$-$NR_3R_4$ ou alcoylène en $C_2$ à $C_4^{\oplus}$–$NR_3R_4R_5Z^{\ominus}$,

$R_3$ représente un hydrogène, un alcoyle en $C_1$ à $C_4$, un alcoxyalcoyle en $C_3$ à $C_5$, un halogénalcoyle en $C_1$ à $C_4$, un carboxyalcoyle en $C_2$ à $C_4$, un alcoxy en $C_3$ à $C_6$-carboxyalcoyle, un hydroxyalcoyle en $C_1$ à $C_4$ ou un –CO-alcoyle,

$R_4$ représente un hydrogène, un alcoyle en $C_1$ à $C_4$, un alcényle en $C_2$ à $C_4$ ou un hydroxyalcoyle en $C_1$ à $C_4$,

$R_5$ représente un hydrogène ou un alcoyle en $C_1$ à $C_4$,

$R_6$ et $R_7$ représententà chaque fois un alcoyle en $C_1$ à $C_4$,

Y représente un cation alcalin, alcalino-terreux ou ammonium et

Z représente un anion halogène, ou bien où

$R_3$ et $R_4$ représentent ensemble avec l'atome d'azote qui les lie un noyau pyrrolidine, pipéridine, morpholine, thiomorpholine, pipérazine, pyrazole ou triazole et

$R_6$ et $R_7$ représentent ensemble avec l'atome d'azote qui les lie un noyau pyrrolidine ou pipéridine, ou peuvent avoir cette signification à l'exception des deux composés propargylester de l'acide 4-(3',5'-dichloropyridyl-2'-oxy)-$\alpha$-phénoxy-propionique et propargylester de l'acide 4-(3',5'-dichloropyridyl-2'-oxy)-$\alpha$-phénoxy-thiopropionique.

2. Agent selon la revendication 1, caractérisé en ce que dans le composant de formule II Hal et R représentent un chlore, alcoylène représente le groupe $-CH(CH_3)-$ et X représente $-OR_1$, $-S-R_2$ ou $NR_3R_4$, où $R_1$ et $R_2$ représentent chacun un hydrogène, un alcoyle en $C_1$ à $C_5$, un halogénalcoyle en $C_1$ à $C_4$, un alcynyle en $C_4$ à $C_6$, un halogénalcynyle en $C_4$ à $C_6$, un alcényle en $C_3$ à $C_6$, un halogénalcényle en $C_3$ à $C_6$, un alcoxy en $C_3$ à $C_6$-carboxyalcoyle éventuellement substitué par un cyano, un phényle ou un benzyle éventuellement substitué par un nitro ou l'un des groupes alcoylène en $C_2$ à $C_4$–$NR_3R_4$ ou alcoylène en $C_2$ à $C_4$-$N^{\oplus}R_3R_4R_5Z^{\ominus}$ et $R_3$, $R_4$ et $R_5$ représentent chacun un alcoyle en $C_1$ à $C_4$ ou $R_3$ et $R_4$ forment ensemble avec l'atome d'azote qui les lie un noyau pyrazole.

3. Agent selon la revendication 2, caractérisé en ce que dans le composant du mélange de formule II X représente $-OR_1$ ou $-S-R_2$, où $R_1$ et $R_2$ représentent un hydrogène, un alcoyle en $C_1$ à $C_5$, un alcényle en $C_3$ à $C_6$ ou un alcynyle en $C_4$ à $C_6$.

4. Agent selon la revendication 1, caractérisé en ce que le compoant du mélange de formule II représente l'acide 4-(3',5'-dichloropyridyl-2'-oxy)-$\alpha$-phénoxy-propionique ou ses esters méthylique, éthylique, propylique et butylique ainsi que les mêmes dérivés de l'acide thiopropionique correspondant.

5. Agent selon l'une des revendications 1 à 4, caractérisé en ce que le composant du mélange I est représenté par la 3-(4-isopropylphényl)-1,1-diméthyl-urée (I a).

6. Agent selon l'une des revendications 1 à 5, caractérisé en ce que dans l'agent mentionné le composant (I) est présent par rapport au composant (II) dans un rapport pondéral approximativement semblable ou en excés.

7. Agent selon la revendication 6, caractérisé en ce que le rapport pondéral entre le composant (I) et le composant (II) s'élève à 1 : 1 à 20 : 1, de préférence à 4 : 1 à 10 : 1.

8. Procédé de lutte sélective contre les mauvaises herbes dans les céréales, caractérisé en ce qu'on traite des cultures de céréales atteintes par les mauvaises herbes en post-levée avec une quantité efficace d'un agent selon l'une des revendications 1 à 7.

9. Procédé selon la revendication 8, caractérisé en ce qu'on traite des cultures de céréales qui contiennent comme mauvaises herbes des dicotylédones des genres Chrysanthemum et Sinapis ainsi que comme monocotylédones Alopecurus myosuroides, Echinochloa crus galli ainsi que lesgraminées de genre Lolium, Setaria, Phalaris, Poa et les différentes espèces d'avoine sauvage, avec les agents mentionnés.

10. Procédé selon les revendications 8 et 9, caractérisé en ce qu'on traite les cultures de céréales avec les agents mentionnés en des quantités qui correspondant à 0,1 à 4 kg, de préférence 0,25 à 1,5 kg de matière active totale par hectare.

11. Procédé selon les revendications 8 à 10, caractérisé en ce que les espèces de céréales sont le blé d'été, le blé d'hiver et le blé dur, le seigle et l'orge d'hiver et d'été.